# EUROPÄISCHE PATENTANMELDUNG

(11) **EP 4 439 933 A1**
(43) Veröffentlichungstag der Anmeldung: **02.10.2024**
(21) Anmeldenummer: 24151508.9
(22) Anmeldetag: 12.01.2024
(51) Int. Cl.: H02K 1/278, H02K 1/02, H02K 1/30, H02K 7/14, H02K 15/03, H02K 15/12

(54) **ROTOR**

(30) Priorität: 29.03.2023 DE 102023107936; 05.01.2024 DE 102024100239
(71) Anmelder: Wirthwein SE, 97993 Creglingen (DE)
(72) Erfinder: WIEDEMANN, Jan, 97855 Triefenstein-Lengfurt (DE); HOFMANN, Marius Thomas, 97070 Würzburg (DE)
(74) Vertreter: Stippl Patentanwälte

(57) **Zusammenfassung**

Rotor (1) als Innenläufer für ein permanentmagnetisch erregbares elektrisches Antriebssystem (10) umfassend einen Rotorkörper (2) mit einem außenseitigen Ring (4), wobei der Ring (4) ein auf den Rotorkörper (2) aufgebrachtes, vorzugsweise aufgespritztes, kunststoffgebundenes Permanentmagnetmaterial umfasst, wobei das auf den Rotorkörper (2) aufgebrachte, kunststoffgebundene Permanentmagnetmaterial entlang des Umfangs des Rings (4) lediglich in Teilbereichen (6) angeordnet ist, zwischen den Teilbereichen (6) des aufgebrachten, kunststoffgebundenen Permanentmagnetmaterials sich Trennstege (7) befinden, die die Teilbereiche (6) voneinander beabstanden, und an der Außenseite des Rings (4) eine Umhüllung (8) angeordnet ist.

## Beschreibung

Die vorliegende Erfindung betrifft einen Rotor als Innenläufer für ein permanentmagnetisch erregbares elektrisches Antriebssystem gemäß dem Oberbegriff des Anspruchs 1 sowie ein entsprechendes Antriebssystem.

Klassische permanentmagnetische Rotormagneten umfassen gesinterte oder gepresste Magneten, die in ein magnetisch leitfähiges Bauteil eingepresst oder mit diesem verklebt werden. Die Verarbeitung derartiger Rotormagneten ist aufwendig und kostenintensiv. Zusätzlich verursachen gesinterte oder gepresste Magnete hohe Wirbelstromverluste. Diese steigen mit zunehmender Drehzahl. Gleichzeitig steigt jedoch der Bedarf an elektrische Antriebssysteme mit immer höherer Drehzahl bei immer kleineren Abmessungen. Diesen steigenden Anforderungen werden klassische permanentmagnetische Rotormagneten immer weniger gerecht. Alternativ zu gesinterten oder gepressten Magneten können Magnete für Rotoren auch aus hartmagnetischen Compounds hergestellt werden. Diese werden üblicherweise als Ring für eine Halbach-Magnetisierung hergestellt. Die Halbach-magnetisierung erfordert jedoch große Mengen an hartmagnetischen Compounds, was zu hohen Kosten der Herstellung führt.

### Druckschriftlicher Stand der Technik

Die DE 10 2013 007 562 A1 Rotor für eine permanentmagnetisch erregte, elektrische Maschine, mit einem Rotormagneten aus einem kunststoffgebundenem Magnetmaterial und mit einem drehtest mit einer Welle verbundenen Rotorkörper, an dem der Rotormagnet befestigt ist, und der mehrere Vorsprünge aufweist, an denen die Magnetpolübergänge zwischen den Magnetpolen angeordnet. Der Rotorkörper ist aus einzelnen in axialer Richtung gestapelten Stahlblechen gestapelt. Er kann auch aus Kunststoff gefertigt sein. Der Rotorkörper erstreckt sich unmittelbar von der Welle radial nach außen bis hin zu den Rotormagneten. Am Außenumfang kann eine Hülse angeordnet sein.

Aus der JP 2002349470 A ist eine elektrische Motorpumpe mit einem aus Harz bestehenden Flügelrad als Innenläufer bekannt, welcher eine Nabe für eine Welle sowie mehrere an der Nabe befestigte Schaufelblätter aufweist. Die Spitzen der Schaufelblätter sind mit einem Ring verbunden, in den Magnete allseitig eingebettet sind. Der Ring ist einstückiger Teil des Flügelrads ist.

Die DE 10 2005 044 327 A1 betrifft eine elektrische Maschine mit Permanentmagneten am Rotor. Der Rotor weist Schaufelblätter zur Förderung von Luft zur Kühlung auf. Die Permanentmagnete befinden sich innerhalb eines Blechpakets. Alternativ können die Permanentmagnete auch direkt d. h. ohne das zusätzliche Blechpaket auf der Nabenkonstruktion fixiert und platziert werden.

Die US 2003/0085629 A1 lehrt eine Permanentmagnet-Halteeinrichtung für Hochgeschwindigkeits-Rotoren. Hierbei sind Permanentmagnete an der Außenseite eines äußeren Rings, an dessen Innenwand Schaufelblätter Die Permanentmagnete sind von einem U-förmigen Halteelement umgeben. Zwischen zwei benachbarten Permanentmagneten befindet sich eine Schicht aus laminiertem magnetischen Material, die oberhalb des Permanentmagnets einen Spalt bildet, der durch einen Spaltkeil geschlossen ist. Außenseitig ist eine Manschette vorgesehen.

Die DE 10 2011 105 867 A1 betrifft einen Rotor als Innenläufer für eine permanentmagnetisch erregte elektrische Maschine gemäß dem Oberbegriff des Anspruchs 1. Der Rotor umfasst einen aus gestapelten Rotorblechen bestehenden Rotorkörper mit umfänglich angeordneten, radial nach außen spitz zulaufenden Vorsprüngen. Auf die Außenumfangsfläche des Rotorkörpers ist ein einstückiger Rotormagnet in Form eines kunststoffgebundenes Permanentmagnetmaterials vollumfänglich aufgespritzt. Durch die Form des Rotorkörpers kann das Volumen des angespritzten Rotormagneten gegenüber einem Ringmagneten verringert werden, wodurch weniger Magnetmaterial benötigt wird.

Aus der DE 100 65 850 B4 ist ein an eine Metallwelle gebundenes dauermagnetisches Bauteil auf Kunststoffbasis bekannt, bei dem eine magnetisch wirksame Oberfläche von einer in Umfangsrichtung durchgängigen Schicht aus hartmagnetischem Kunststoff gebildet ist. Unter dieser Schicht befindet sich eine Schicht aus weichmagnetischem Kunststoff, die mittels einer faserverstärkten, bevorzugt unmagnetischen Kunststoffschicht an den Metallträger gebunden ist.

Die DE 10 2017 203 987 B4 offenbart eine Pumpe für ein wasserführendes Haushaltsgerät, wobei die Pumpe einen Pumpenmotor mit einem in einem zu fördernden flüssigen Medium laufenden Rotor umfasst. Der Rotor des Pumpenmotors umfasst einen einstückigen umfänglich durchgängigen Ferritkörper mit mehr als zwei magnetischen Polen, wobei der Ferritkörper einer Halbach-Magnetisierung unterzogen ist und wobei in dem Ferritkörper zumindest ein mechanisch stabilisierender Zuschlagstoff enthalten ist.

Aus der DE 10 2018 202 943 A1 ist ein bürstenloser Elektromotor mit einem permanentmagnetischen Rotormagneten bekannt, der als Spritzgussteil mit eingelagertem, magnetisch anisotropem Material ausgebildet ist. Das magnetisch anisotrope Material ist vollumfänglich vorgesehen und weist eine Halbach-Magnetisierung auf.

Die DE 20 2018 104 094 U1 betrifft einen Elektromotor für Fenster-, Sitz- und andere Zubehöraktoren eines Fahrzeugs. Hierbei wird im Spritzgießverfahren für den Stator magnetisches Material an die Innenseite eines Kunststoffgehäuses des Elektromotors angeformt. Ein Kommutator stellt über Kontaktbürsten eine elektrische Verbindung mit einem Anker bereit.

Die DE 20 2006 002 789 U1 offenbart einen Minilüfter, bei dem in einen Außenrotor ein Ring aus Kunststoff mit Hartferritteilchen in einen Randabschnitt eines Trägerteils des Außenrotors eingespritzt ist. An dem Trägerteil sind radial verlaufende Lüfterflügel einstückig angeformt.

Schließlich ist aus der EP 3 926 791 A1 ein Außenrotor für elektrische Antriebssysteme bekannt, der einen Hohlzylinder sowie eine scheibenförmige Platte umfasst, welche zur Erzielung einer Halbach-Magnetisierung einstückig aus einem kunststoff-magnetischen Material geformt sind.

### Aufgabe der vorliegenden Erfindung

Die Aufgabe der vorliegenden Erfindung besteht darin, einen für hohe Drehzahlen geeigneten, als Innenläufer einzusetzenden Rotor bei einem reduzierten Verbrauch an magnetischen Compound-Material zur Verfügung zu stellen.

### Lösung der Aufgabe

Die vorstehende Aufgabe wir durch die Merkmale des Anspruchs 1 sowie des Anspruchs 18 gelöst. Zweckmäßige Ausgestaltungen der Erfindung sind in den abhängigen Ansprüchen beansprucht.

Erfindungsgemäß ist das aufgebrachte, kunststoffgebundene Permanentmagnetmaterial entlang des Umfangs des außenseitigen Rings aufgrund von in dem außenseitigen Ring angeordneten Trennstegen lediglich in Teilbereichen vorgesehen. Es liegt also kein durchgängiger Ring von Permanentmagnetmaterials vor. Hierdurch kann in erheblichem Umfang magnetisches Compound-Material eingespart werden. Ein geschlossener Kreis aus permanentmagnetischem Material mit einer Polung zur Schaffung einer Halbach-Magnetisierung ist somit nicht mehr notwendig. An der Außenseite des außenseitigen Rings ist eine vollumfängliche Umhüllung angeordnet, die dazu dient, den Ring bei hohen Drehzahlen gegen sich daraus ergebende Fliehkräfte sicher am Rotorkörper zu fixieren. Die Umhüllung wirkt wie eine Bandage. Der erfindungsgemäße Rotor, der als Innenläufer eingesetzt wird, ist hierdurch besonders effizient. Denn obgleich das kunststoffgebundene Permanentmagnetmaterial nicht entlang des gesamten Umfangs des zweiten Rings einstückig angeformt ist, sondern durch die Trennstege voneinander in Teilbereiche getrennt ist, kann der Rotor dennoch vorteilhaft in hohen Drehzahlbereichen eingesetzt werden. Der erfindungsgemäße als Innenläufer ausgebildete Rotor wird außenumfänglich von einem Stator umgeben.

Vorzugsweise können die Trennstege teilweise von dem kunststoffgebundenen Permanentmagnetmaterial überlagert sein. Das bedeutet, dass, die Breitenerstreckung des kunststoffgebundene Permanentmagnetmaterial zwischen zwei benachbarten Trennstegen sich von innen nach außen vergrößert. Dies wirkt sich vorteilhaft auf den sinusförmigen Verlauf des magnetischen Felds aus.

Besonders vorteilhaft auf den sinusförmigen Verlauf des magnetischen Felds wirkt es sich aus, wenn sich die Teilbereiche von der Innenseite des Rings radial hin zur Außenseite des Rings in Umfangsrichtung über einen ersten Bereich sowie in einem sich daran anschließenden zweiten Bereich verbreitern und der Grad der Verbreiterung in dem zweiten Bereich größer ist als in dem ersten Bereich.

Hierbei kann der jeweilige Teilbereich mit dem jeweils beidseitig angrenzenden Trennsteg eine Grenzfläche bilden derart, dass der jeweilige Teilbereich in seinem radial betrachtet äußeren Bereich beidseitig eine zum jeweils benachbarten Stützbereich (Trennsteg) hin verlaufende Zunge an kunststoffgebundenem Permanentmagnetmaterial aufweist.

Die Grenzfläche zwischen dem jeweiligen Teilbereich und dem Trennsteg kann einen stetigen und/oder gekrümmten Verlauf aufweisen. Hierdurch können Wirbelströme in dem Permanentmagnetmaterial reduziert werden.

Vorzugsweise kann der stetige und/oder gekrümmte Verlauf der Grenzfläche S-förmig sein. Hierbei steigt die Trennfläche ausgehend von der Innenseite des Rings steil an, verläuft anschließend etwas flacher. Anschließend kann die Trennfläche wieder hin zur Außenseite des Rings etwas steiler ansteigen.

Die Umhüllung besteht vorteilhaft aus Kunststoff, vorzugsweise aus einem Thermoplasten, wie z.B. Polypropylen, Polyamiden oder Polycarbonat, oder einem Duroplast, wie z.B. Epoxidharz, Silikon oder Polyurethan.

Zur Fertigung des Rotors kann die Umhüllung bereits in ein Spritzgusswerkzeug eingelegt und unterspritzt werden. Alternativ kann die Umhüllung auch nachträglich um den Ring des Rotors gewickelt und/oder auf den Ring gepresst werden.

Besonders vorteilhaft kann die Umhüllung eine Armierung, vorzugsweise eine Faserarmierung, umfassen. Die Faserarmierung kann entweder Einzelfasern umfassen, die auf den Ring aufgewickelt werden, oder ein Faser-Gewebe oder Faser-Gewirke. Als Fasern können Glasfasern, Carbonfasern oder Naturfasern verwendet werden. Die Armierung sorgt für einen besonderen sicheren Halt des kunststoffgebundenen Permanentmagnetmaterials auf dem Rotor.

Der Kunststoff des kunststoffgebundenen Permanentmagnetmaterials ist vorzugsweise elektrisch isolierend. Hierdurch können Wirbelströme in den Magnetelementen verhindert und damit Verlustleistungen verringert werden. Außerdem wird eine Erwärmung des Antriebssystems minimiert.

Gemäß einer Ausführungsform können die Trennstege integraler bzw. einstückiger Bestandteil des Rotorkörpers sein. Hierdurch kann die Herstellung des Rotors vereinfacht werden.

Der Rotorkörper umfasst gemäß einem weiteren Ausführungsbeispiel einen (zweiten) Ring, welcher an der Innenseite des das kunststoffgebundene Permanentmagnetmaterial beinhaltenden außenseitigen Rings angrenzt.

Der Rotorkörper ist, zumindest im Bereich des zweiten Rings, magnetisch leitfähig. Hierdurch kommt es zu einer verbesserten magnetischen Flussführung im inneren des Rotors und somit zu einer Erhöhung des Wirkungsgrades des Rotors.

Der Rotorkörper ist vorzugsweise in seinem an der Innenseite des zweiten Rings anschließenden Erstreckungsbereich nicht magnetisch leitfähig. Die Begrenzung der magnetischen Leitfähigkeit auf den zweiten Ring ist vorteilhaft, weil dadurch Wirbelstromverluste auf den zweiten Ring begrenzt werden, sich also nicht nach innen hin zur Welle erstrecken und deshalb geringgehalten werden können. Dies ist für die Laufeigenschaften von sehr schnell rotierenden Rotoren besonders vorteilhaft.

Aufgrund der Erfindung kann der Rotorkörper hierfür, zumindest im Bereich des zweiten Rings, aus einem weichmagnetischen Compound geformt sein.

Vorzugsweise weist der Rotorkörper Förderschaufeln oder einen ein oder mehrteiligen Träger oder eine Aufnahme für eine Welle auf. Mittels Förderschaufeln kann der Rotor vorteilhaft unmittelbar zum Fördern eines Fluides verwendet werden kann. Mittels eines ein oder mehrteiligen Trägers kann der Rotor vorteilhaft für einen schnell rotierenden Antrieb verwendet werden.

Die Förderschaufeln oder der Träger befinden sich vorzugsweise zwischen einer Welle oder der Aufnahme für eine Welle und dem zweiten Ring. Die Welle oder die Aufnahme für eine Welle, die Förderschaufeln bzw. der Träger sowie der Ring, der an den Ring mit dem kunststoffgebundenen Permanentmagnetmaterial angrenzt, können als einstückiges Bauteil bzw. Formteil gefertigt sein. Die Trennstege können ebenfalls einstückiger Bestandteil des zweiten Rings bzw. Formteils sein.

Der Träger ist vorzugsweise aus nicht magnetisch leitfähigem Material, z. B. Kunststoff, vorzugsweise aus einem Faserverbundmaterial z. B. aus einem faserverstärktem Kunststoffmaterial aufgebaut.

Der Rotorkörper kann im Bereich des zweiten Rings aus einem weichmagnetischen Compound als erste Spritzgießkomponente zur Gewährleistung einer magnetischen Leitfähigkeit geformt sein. Ferner kann der Rotorkörper in seinem Erstreckungsbereich ausgehend von dem zweiten Ring radial nach innen aus Kunststoff ohne weichmagnetische Eigenschaften als zweite Spritzgießkomponente Material geformt sein.

Vorteilhaft kann der Rotorkörper als Mehrkomponenten-Spritzgießteil ausgebildet sein. Hierdurch kann ein erfindungsgemäßer Rotorkörper mit minimierten Wirbelstromverlusten auf einfache Weise gefertigt werden.

Die vorliegende Erfindung betrifft des Weiteren ein permanentmagnetisch erregbares elektrisches Antriebssystem umfassend einen Rotor gemäß mindestens einem der Ansprüche 1 bis 18 als Innenläufer sowie einen den Rotor außenseitig umgebenden Stator. Bei einem derartigen Antriebssystem kann es sich um einen Motor für oder als Bestandteil eines Aktors handeln. Vorzugsweise handelt es sich bei dem Antriebssystem um einen Bestand einer Einrichtung zur Förderung eines Fluides, vorzugsweise eines explosiven oder brennbaren Fluides. Dies betrifft insbesondere sog. "Pumpmotoren" oder "Fördermotoren" für Fluide (Gase oder Flüssigkeiten). Hierbei ist es vorteilhaft, dass im Aufbau des Rotors keine elektrischen Komponenten vorgesehen sind. Hierdurch kann der Rotor direkt in explosionsgefährdeten Fluiden bzw. Medien betrieben werden.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Sich wiederholende technische Merkmale sind der Übersichtlichkeit halber lediglich einmal mit einem Bezugszeichen versehen. Es zeigen:
- Fig. 1: eine stark vereinfachte, schematische Darstellung einer Installation zur Förderung eines Fluids unter Verwendung eines Beispiels eines erfindungsgemäßen Antriebssystems;
- Fig. 2: eine Schnittdarstellung durch das Antriebssystem von Fig. 1 in der Ebene I-I;
- Fig. 3: eine perspektivische Darstellung des Rotors des Antriebssystems aus Fig. 2 als Beispiel eines erfindungsgemäßen Rotors;
- Fig. 4: eine Schnittdarstellung durch das Antriebssystem von Fig. 1 in der Ebene I-I gemäß einer zweiten Ausgestaltung der Erfindung; sowie
- Fig. 5: eine Schnittdarstellung durch das Antriebssystem von Fig. 1 in der Ebene I-I gemäß einer dritten Ausgestaltung der Erfindung.

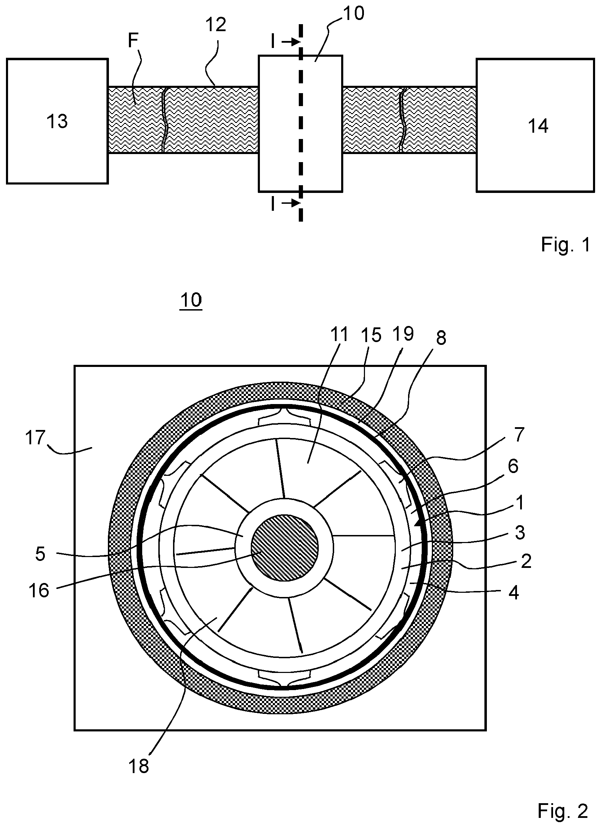

Fig. 1 zeigt beispielhaft eine Installation zur Förderung eines Fluids von einer Funktionseinheit 13 zu einer Funktionseinheit 14 unter Verwendung eines permanentmagnetisch erregbaren elektrischen Antriebssystems 10. Das Antriebssystem 10 ist hierbei beispielsweise in eine Rohrleitung 12, in der das Fluid F gefördert wird, integriert. Bei dem Fluid F kann es sich um ein leicht brennbares oder explosives Fluid (Flüssigkeit oder Gas) handeln. Das Antriebssystem 10 ist mit einer in Fig. 1 jeweils nicht dargestellten elektrischen Energieversorgung sowie Kommutatorschaltung ausgestattet. Bei der Funktionseinheit 13 kann es sich beispielsweise um einen Tank für Fluid F handeln. Bei der Funktionseinheit 14 kann es sich beispielsweise um einen Verbraucher an Fluid F handeln.

Die Fig. 2 zeigt den inneren Aufbau des Antriebssystems 10. Das Antriebssystem 10 umfasst ein Gehäuse 17, in dem sich ein permanentmagnetisch angetriebener Rotor 1 als sogenannter Innenläufer sowie ein diesen außen umgebender Stator 15 befindet. Entlang des Umfangs des Stators 15 befinden sich eine Mehrzahl von in Fig. 2 nicht einzeln dargestellten Statorspulen, die von einer Kommutatorschaltung in der Weise beaufschlagt werden, dass sich der Rotor 1 innerhalb des Stators 15 in einer gewünschten Drehrichtung dreht. Zwischen dem Rotor 1 und dem Stator 15 befindet sich ein zylindermantelförmiger Luftspalt 19.

Der Rotor 1 umfasst einen Rotorkörper 2 mit einem inneren Ring 3 sowie einem radial außenseitig angrenzenden außenseitigen Ring 4. Der außenseitige Ring 4 besitzt durch Trennstege 7 voneinander beabstandete Teilbereiche 6 aus Permanentmagnetmaterial. Das Permanentmagnetmaterial ist kunststoffgebunden. Es handelt sich hierbei z. B. um NdFeB-Partikel, die in einer Matrix aus Kunststoff eingebunden sind. Das kunststoffgebundene Permanentmagnetmaterial kann somit beispielsweise auf den inneren Ring 3 des Rotors 1 aufgebracht, insbesondere aufgespritzt, werden, woraufhin eine radiale Magnetisierung mittels einer geeigneten Vorrichtung im Anschluss an das Aufbringen des kunststoffgebundenen Permanentmagnetmaterials erfolgt. Alternativ könnten auch Hartferrit-Partikel oder Partikel aus jedem weiteren gängigen hartmagnetischen Werkstoff, z.B. Partikel aus Samarium-Cobalt und/oder Aluminium-Eisen-Cobalt, zum Einsatz kommen.

Bei dem die Matrix bildenden Kunststoff handelt es sich vorzugsweise um einen elektrisch isolierenden oder zumindest dielektrischen Kunststoff.

Das Material des inneren Rings 3 ist weichmagnetisch. Dementsprechend kann als innerer Ring 3 ein Eisenring oder ein Ring aus weichmagnetischem, kunststoffgebundenem Compound vorgesehen sein. Die jeweiligen Trennstege 7 können entweder integraler Bestandteil des inneren Rings 3 sein oder aber nachträglich auf den inneren Ring 3 aufgebracht sein. An der Innenseite des inneren Rings 3 können sich vorzugsweise nicht magnetisch leitfähige Bereiche anschließen, die beispielsweise aus Kunststoff bestehen. Die magnetische Leitfähigkeit endet hierbei somit an der Innenseite des zweiten Rings 3.

An der Innenseite des Rotorkörpers 2 befindet sich eine Aufnahme 5 für eine Welle 6, die den Rotor 1 trägt bzw. die mit einem nicht dargestellten Aktor verbunden ist.

Sofern das permanentmagnetisch erregbare elektrische Antriebssystem 10 zur Förderung von Fluid F vorgesehen ist, kann der Rotorkörper 2 mit einzelnen Förderschaufeln 11 versehen sein. Ein derartig ausgebildeter Rotorkörper 2 befindet sich vorteilhaft unmittelbar im Fluid F. Da in dem Rotor 1 keinerlei elektrische Bauteile vorgesehen sind, kann ein erfindungsgemäß ausgebildeter Rotor 1 in vorteilhafterweise in unmittelbarem Kontakt mit dem Fluid F betrieben werden.

Vor allem bei leicht brennbaren oder sogar explosiven Fluiden (Flüssigkeiten oder Gasen) ist dies von besonderem Vorteil.

Im Außenbereich des äußeren Rings 4 befindet sich eine vollumfängliche Umhüllung 8, die für die notwendige mechanische Stabilität des Rotors 1 sorgt. Die Umhüllung 8 besteht aus Kunststoff, vorzugsweise aus einem Thermoplasten oder einem Duroplast. Sie kann bei Bedarf zur Erhöhung der Festigkeit eine Armierung, vorzugsweise eine Faserarmierung, aufweisen. Die Faserarmierung kann entweder Einzelfasern umfassen, die auf den Ring 4 aufgewickelt werden, oder ein Faser-Gewebe oder Faser-Gewirke. Als Fasern können Glasfasern, Carbonfasern oder Naturfasern verwendet werden. Die Armierung sorgt für einen besonders sicheren Halt des kunststoffgebundenen Permanentmagnetmaterials auf dem Rotor 1.

Bei dem thermoplastischen Material der Umhüllung 8 handelt es sich z.B. um Polypropylen, Polyamid oder Polycarbonat. Bei dem duroplastischen Material der Umhüllung 8 handelt es sich beispielsweise um Epoxidharz, Silikon oder Polyurethan.

Zur Fertigung des Rotors 1 kann die Umhüllung 8 bereits in ein Spritzgusswerkzeug eingelegt und umspritzt werden. Alternativ kann die Umhüllung 8 auch nachträglich um den Ring 3 des Rotors 1 gewickelt und/oder auf den Ring 3 gepresst werden.

Hierdurch kann der Rotor mit sehr hohen Drehzahlen betrieben werden, ohne dass die Gefahr eines Ablösens der Teilbereiche 6 besteht.

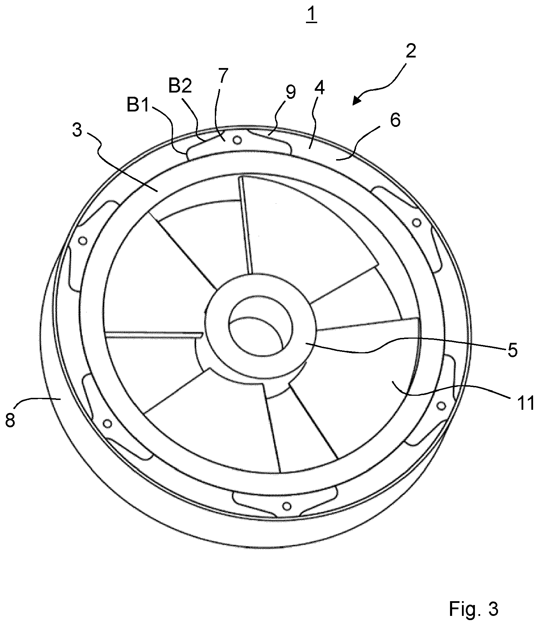

Die besondere Ausbildung der Teilbereiche 6 des kunststoffgebundenen Permanentmagnetmaterials wird nachstehend unter Bezugnahme auf Fig. 3 näher erläutert. Jeder Teilbereich 6 bildet mit seinem benachbarten Trennsteg 7 des Rings 4 eine Grenzfläche, die einen besonderen Verlauf aufweist. Wie aus Fig. 3 ersichtlich, bildet der jeweilige Teilbereich 6 mit dem jeweils beidseitig angrenzenden Trennsteg 7 eine Grenzfläche, derart, dass der jeweilige Teilbereich 6 in seinem radial betrachtet äußeren Bereich beidseitig eine zum jeweils benachbarten Trennsteg 7 hin verlaufende Zunge 9 an kunststoffgebundenem Permanentmagnetmaterial aufweist. Für den äußeren Ring 4 wird somit im Vergleich zu einem durchgehenden Ring erheblich weniger permanentmagnetisches Compound-Material benötigt. Dennoch wird ein vorteilhafter sinusförmiger Verlauf des magnetischen Feldes erreicht. Aufgrund der Beabstandung der Teilbereiche 6 über die Trennstege 7 liegt keine Halbach-Magnetisierung vor. Auf diese Weise kann permanentmagnetisches Compound-Material in erheblichem Umfang eingespart werden.

Die Grenzfläche zwischen dem jeweiligen Teilbereich 6 und dem benachbarten Trennsteg 7 weist vorzugsweise einen stetigen S-förmigen Verlauf auf. Hierbei verbreitern sich die Teilbereiche 6 von der Innenseite des Rings 4 radial hin zu seiner Außenseite in Umfangsrichtung in einen ersten Bereich B1 sowie in einen zweiten Bereich B2, wobei der Grad der Verbreitung in dem zweiten Bereich B2 größer ist als in dem ersten Bereich B1. Hierdurch wird die Ausbildung der Zunge 9 des Teilbereichs 6 an permanentmagnetischem Material erreicht. Der Verlauf der Grenzfläche zwischen dem Teilbereich 6 und dem angrenzenden Trennsteg 7 gleicht einem liegenden S. Außen ist der außenseitige Ring 4 von der Umhüllung 8 begrenzt. Der Rotor 1 ist in Fig. 3 ohne Welle 16 dargestellt.

Gemäß einer zweckmäßigen Ausgestaltung kann der Rotorkörper 2 bezüglich seiner Aufnahme 5 sowie des inneren Rings 3 einschließlich etwaiger Förderschaufeln 11 (sofern sie vorhanden sind) sowie vorzugsweise auch einschließlich der Trennstege 7 als einstückiges Bauteil bzw. Formteil ausgebildet sein. Es ist sogar möglich, bei diesem einstückigen Bauteil anstatt der Aufnahme 5 für die Welle 16 auch die Welle 16 selbst als Teil des Bauteils sogleich mit zu formen. Das Bauteil bzw. Formteil kann somit als Spritzgussteil ausgebildet sein. Selbst der Ring 4, vorzugsweise einschließlich der Umhüllung 8, kann einstückiger Bestandteil des Formteils sein, indem der gesamte Rotorkörper im Mehrkomponentenspritzgussverfahren hergestellt wird.

Der erfindungsgemäße Rotor 1 ist als Innenläufer für ein einen außenseitigen Stator 15 beinhaltendes Antriebssystem 10 vorgesehen. Bei letzterem kann es sich um einen Motor für einen oder als Bestandteil eines Aktors handeln. Vorzugsweise handelt es sich bei dem Antriebssystem 10 um einen Bestandteil einer Einrichtung oder um eine Einrichtung zur Förderung eines Fluids F, vorzugsweise eines explosiven oder brennbaren Fluids. Dies betrifft insbesondere sogenannte "Pumpmotoren" oder "Fördermotoren" für Fluide (Gase oder Flüssigkeiten). Diese können direkt in explosionsgefährdeten Fluiden bzw. Medien betrieben werden.

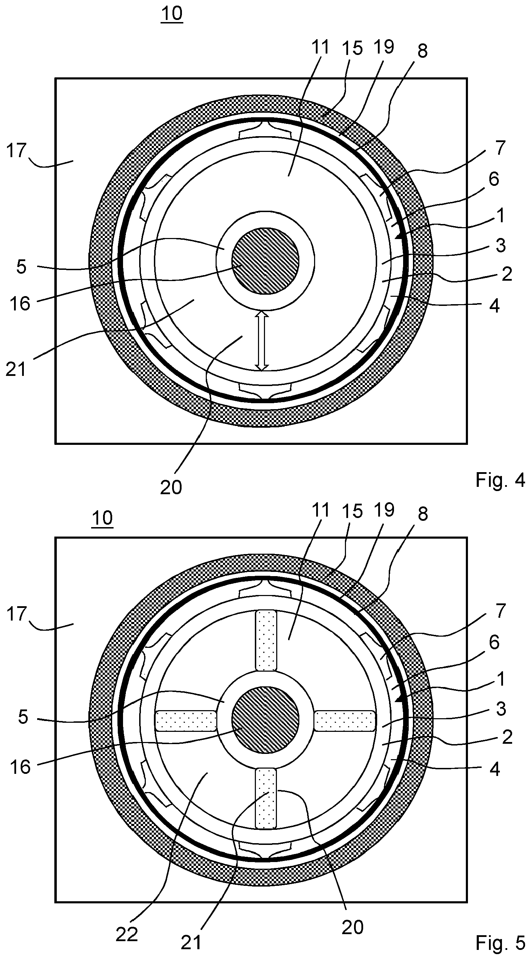

Fig. 4 zeigt eine zweite Ausgestaltung der Erfindung, bei der sich der Rotorkörper 2 von der ersten Ausgestaltung dadurch unterscheidet, dass er statt Förderschaufeln einen vollumfänglichen Träger 21 umfasst, der sich zwischen dem zweiten Ring 3 und der Welle 16 befindet. Der Rotor 1 dient hierbei als Teil eines schnell rotierenden Antriebs 10. Der Träger 21 grenzt an die Wellenaufnahme 5 an. Der Träger 21 ist vorzugsweise aus nicht magnetisch leitfähigem Material, z. B. Kunststoff, vorzugsweise aus einem Faserverbundmaterial z. B. aus einem faserverstärktem Kunststoffmaterial aufgebaut. Im Übrigen entspricht die zweite Ausgestaltung der ersten Ausgestaltung, so dass auf deren vorherige Beschreibung Bezug genommen wird.

Fig. 5 zeigt eine dritte Ausgestaltung der Erfindung, bei der sich der Rotorkörper 2 von der ersten Ausgestaltung dadurch unterscheidet, dass er keine Förderschaufeln umfasst, sondern einen mehrere Streben umfassenden Träger 21, wobei sich die Streben (bzw. der Träger 21) zwischen dem zweiten Ring 3 und der Welle 16 bzw. Aufnahme 5 der Welle 16 befindet. Zwischen den Streben des Trägers 21 befindet sich jeweils ein Freiraum 22. Der Rotor 1 dient hierbei als Teil eines schnell rotierenden Antriebs 10. Diese Form des Trägers ist vorzugsweise ebenfalls aus nicht magnetisch leitfähigem Material, z. B. Kunststoff, aufgebaut. Im Übrigen entspricht die dritte Ausgestaltung der ersten Ausgestaltung, so dass auf deren vorherige Beschreibung Bezug genommen wird.

Vorzugsweise kann der Rotorkörper 2 als Mehrkomponenten-Spritzgießteil ausgebildet sein, wobei der Rotorkörper 2 im Bereich des zweiten Rings 3 aus einem weichmagnetischen Compound als erste Spritzgießkomponente geformt ist und in seinem Erstreckungsbereich 20 radial nach innen (vorzugsweise im Bereich der Förderschaufeln 11 oder des Trägers 21) aus Kunststoff ohne weichmagnetische Eigenschaften als zweite Spritzgießkomponente Material geformt ist.

Alternativ kann der zweite Ring 3 z. B. als Metallring (Eisenring) ausgebildet sein, an den ein Erstreckungsbereich 20 radial nach innen (vorzugsweise die Förderschaufeln 11 oder der Träger 21) des Rotorkörpers 2 aus einem (nicht magnetisch leitfähigen) Kunststoff angespritzt ist. Bei einem weichmagnetischen Compound handelt es sich um einen magnetisch leitfähigen Kunststoff, dem magnetisch leitfähige Partikel (z. B. Eisenpartikel) zugesetzt sind.

Der äußere Ring 4 kann in Form eines Permanentmagnetpartikel enthaltenden Compounds an der Außenseite des zweiten Rings 3 angespritzt sein.

Die Aufnahme 5 der Welle 16 oder die Welle 16 können integraler Bestandteil des Trägers 21 sein.

Der erfindungsgemäße Rotor 1 kennzeichnet sich zum einen durch einen reduzierten Verbrauch an permanentmagnetischem Material. Zum anderen erlaubt er trotz der lediglich in Teilbereichen 6 vorgesehenen permanentmagnetischen Substanz einen Betrieb bei sehr hohen Drehzahlen. Die Erfindung stellt daher einen ganz besonderen Beitrag auf dem einschlägigen technischen Gebiet dar.

### BEZUGSZEICHENLISTE

- 1: Rotor
- 2: Rotorkörper
- 3: innerer Ring
- 4: äußerer Ring
- 5: Aufnahme
- 6: Teilbereich
- 7: Trennsteg
- 8: Umhüllung
- 9: Zunge
- 10: Antriebssystem
- 11: Förderschaufel
- 12: Rohrleitung
- 13: Funktionseinheit
- 14: Funktionseinheit
- 15: Stator
- 16: Welle
- 17: Gehäuse
- 18: Förderkanal
- 19: Luftspalt
- 20: Erstreckungsbereich
- 21: Träger
- 22: Freiraum

- B1: erster Bereich
- B2: zweiter Bereich
- F: Fluid

## Patentansprüche

1. Rotor (1) als Innenläufer für ein permanentmagnetisch erregbares elektrisches Antriebssystem (10) umfassend
einen Rotorkörper (2) mit einem außenseitigen Ring (4), wobei der Ring (4) ein auf den Rotorkörper (2) aufgebrachtes, vorzugsweise aufgespritztes, kunststoffgebundenes Permanentmagnetmaterial umfasst, **dadurch gekennzeichnet, dass**
das auf den Rotorkörper (2) aufgebrachte, kunststoffgebundene Permanentmagnetmaterial entlang des Umfangs des Rings (4) lediglich in Teilbereichen (6) angeordnet ist,
zwischen den Teilbereichen (6) des aufgebrachten, kunststoffgebundenen Permanentmagnetmaterials sich Trennstege (7) befinden, die die Teilbereiche (6) voneinander beabstanden, und
an der Außenseite des Rings (4) eine Umhüllung (8) angeordnet ist.

2. Rotor (1) nach Anspruch 1, **dadurch gekennzeichnet, dass** die Trennstege (7) teilweise von dem kunststoffgebundenen Permanentmagnetmaterial überlagert sind.

3. Rotor (1) nach Anspruch 1 oder 2, **dadurch gekennzeichnet, dass** sich die Teilbereiche (6) von der Innenseite des Rings (4) radial hin zur Außenseite des Rings (4) in Umfangsrichtung in einem ersten Bereich (B1) sowie in einem zweiten Bereich (B2) verbreitern und der Grad der Verbreiterung in dem zweiten Bereich (B2) größer ist als in dem ersten Bereich (B1).

4. Rotor (1) nach mindestens einem der vorhergehenden Ansprüche, **dadurch gekennzeichnet, dass** der jeweilige Teilbereich (6) mit dem jeweils beidseitig angrenzenden Trennsteg (7) eine Grenzfläche bildet derart, dass der jeweilige Teilbereich (6) in seinem radial betrachtet äußeren Bereich beidseitig eine zum jeweils benachbarten Stützbereich (7) hin verlaufende Zunge (9) aufweist.

5. Rotor (1) nach Anspruch 4, **dadurch gekennzeichnet, dass** die Grenzfläche einen stetigen und/oder gekrümmten Verlauf aufweist.

6. Rotor (1) nach Anspruch 5, **dadurch gekennzeichnet, dass** der stetige und/oder gekrümmte Verlauf der Grenzfläche S-förmig ist.

7. Rotor (1) nach mindestens einem der vorhergehenden Ansprüche, **dadurch gekennzeichnet, dass** die Umhüllung (8) aus Kunststoff, vorzugsweise aus einem Thermoplasten oder einem Duroplast besteht.

8. Rotor (1) nach mindestens einem der vorhergehenden Ansprüche, **dadurch gekennzeichnet, dass** die Umhüllung (8) eine Armierung, vorzugsweise eine Faserarmierung, umfasst.

9. Rotor (1) nach mindestens einem der vorhergehenden Ansprüche, **dadurch gekennzeichnet, dass** der Kunststoff des kunststoffgebundenen Permanentmagnetmaterials elektrisch isolierend ist.

10. Rotor (1) nach mindestens einem der vorhergehenden Ansprüche, **dadurch gekennzeichnet, dass** die Trennstege (7) integraler Bestandteil des Rotorkörpers (2) sind.

11. Rotor (1) nach mindestens einem der vorhergehenden Ansprüche, **dadurch gekennzeichnet, dass** der Rotorkörper (2) einen zweiten Ring (3) umfasst, welcher an der Innenseite des Rings (4) angrenzt.

12. Rotor (1) nach mindestens einem der vorhergehenden Ansprüche, **dadurch gekennzeichnet, dass** der Rotorkörper (2), zumindest im Bereich des zweiten Rings (3), magnetisch leitfähig ist.

13. Rotor (1) nach Anspruch 11 oder 12, **dadurch gekennzeichnet, dass** der Rotorkörper (2) in seinem innerhalb des zweiten Rings (3) befindlichen Erstreckungsbereich (20) nicht magnetisch leitfähig ist.

14. Rotor (1) nach mindestens einem der vorhergehenden Ansprüche, **dadurch gekennzeichnet, dass** der Rotorkörper (2), zumindest im Bereich des zweiten Rings (3), aus einem weichmagnetischen Compound geformt ist.

15. Rotor (1) nach mindestens einem der Ansprüche 11 bis 14, **dadurch gekennzeichnet, dass**
der Rotorkörper (2) als Mehrkomponenten-Spritzgießteil ausgebildet ist, wobei
der Rotorkörper (2) im Bereich des zweiten Rings (3) aus einem weichmagnetischen Compound als erste Spritzgießkomponente geformt ist und
in seinem Erstreckungsbereich (20) radial nach innen aus Kunststoff ohne weichmagnetische Eigenschaften als zweite Spritzgießkomponente Material geformt ist.

16. Rotor (1) nach mindestens einem der vorhergehenden Ansprüche, **dadurch gekennzeichnet, dass** der Rotorkörper (2) Förderschaufeln (11) oder einen ein oder mehrteiligen Träger (21) oder eine Aufnahme (5) für eine Welle (16) aufweist.

17. Rotor (1) nach Anspruch 16, **dadurch gekennzeichnet, dass** sich die Förderschaufeln (11) oder der Träger (21) zwischen einer Welle (16) oder der Aufnahme (5) für eine Welle (16) und dem zweiten Ring (3) befinden.

18. Rotor (1) nach mindestens einem der vorhergehenden Ansprüche, **dadurch gekennzeichnet, dass** der Rotorkörper (2) die Welle (16) einstückig umfasst.

19. Permanentmagnetisch erregbares elektrisches Antriebssystem (10) umfassend einen Rotor (1) gemäß mindestens einem der vorhergehenden Ansprüche als Innenläufer, sowie einen den Rotor (1) außenseitig umgebenden Stator (15).

20. Permanentmagnetisch erregbares elektrisches Antriebssystem (10) nach Anspruch 17, **dadurch gekennzeichnet, dass** das Antriebssystem (10) Bestandteil einer Einrichtung zur Förderung eines Fluides, vorzugsweise eines explosiven oder brennbaren Fluides, ist und der Rotor (1) in Kontakt mit dem Fluid steht.
